# EUROPEAN PATENT SPECIFICATION

(11) **EP 1 323 462 B1**
(45) Date of publication and mention of the grant of the patent: **30.03.2011**
(21) Application number: 02258317.3
(22) Date of filing: 03.12.2002
(51) Int. Cl.: B01D 65/00, B01D 63/02, A61M 1/16

(54) **Filtering device with associated sealing design and method**
Filtervorrichtung mit entsprechender Dichtungsbauweise und Verfahren
Dispositif de filtrage avec une construction d'étanchéité correspondante et méthode

(30) Priority: 05.12.2001 US 7516
(43) Date of publication of application: 02.07.2003
(73) Proprietor: Fresenius USA, Inc., Lexington, MA 02173 (US)
(72) Inventor: Stroup, Eric Wilson, North Odgen, Utah 84414 (US); Petersen, Danen Lee, Ogden, Utah 84404 (US); McGhee, Troy, North Ogden, Utah 84414 (US); Brown, William Kelly, South Weber, Utah 84405 (US); Tuominen, Olli, Marlboro, Massachusettes 01752 (US); Pope, Rodney William, Clearfield, Utah 84015 (US)
(74) Representative: Lucas, Brian Ronald

(56) References cited:
- WO-A-00/53293
- WO-A-01/60502
- WO-A-84/02478
- PATENT ABSTRACTS OF JAPAN vol. 1997, no. 01, 31 January 1997 (1997-01-31) -& JP 08 229359 A (KANEGAFUCHI CHEM IND CO LTD), 10 September 1996 (1996-09-10) -& DATABASE WPI Section Ch, Week 199646 Derwent Publications Ltd., London, GB; Class A88, AN 1996-459625 XP002306926 -& JP 08 229359 A (KANEBUCHI KAGAKU KOGYO KK) 10 September 1996 (1996-09-10)
- PATENT ABSTRACTS OF JAPAN vol. 1998, no. 11, 30 September 1998 (1998-09-30) -& JP 10 165777 A (TORAY IND INC), 23 June 1998 (1998-06-23) -& DATABASE WPI Section Ch, Week 199835 Derwent Publications Ltd., London, GB; Class B04, AN 1998-406644 XP002306927 -& JP 10 165777 A (TORAY IND INC) 23 June 1998 (1998-06-23)

## Description

### FIELD OF THR INVENTION

This invention relates to filtering devices, and more particularly to hollow fiber type filters :in which the requirement for the liquid being tiltered not to be contaminated is substantially absolute.

Typical filters wherein the requirement for the liquid being filtered not to be contaminated is substantially absolute include dialysis, and the present invention is especially concerned with these filters, but not exclusively.

Typically, dialyzers are reused. After use in a haemodialysis session for a patient, the dialyzer is cleaned and sterilized for subsequent use by the same patient for a next haemodialysis session, The cleansing, sterilizing, storing, and cataloging of each dialyzer to ensure safe use by the same patient is an expensive and laborious task, and fraught with risk should the dialyzer not effectively have had all of the sterilizing chemicals removed from the dialyzer and the patient be exposed to the sterilizing agent itself. Additionally, if the sterilization process was not able to effectively sterilize the dialyzer, the patient may be subjected to a "non" biocompatible medical device. Further logistic risks remain in the case the dialyzers get mixed up and the wrong dialyzer is used with the wrong patient.

Despite the high cost of processing a dialyser for re-use it has not hitherto appeared possible to manufacture a single use or disposable dialyzer relatively economically. Japanese Patent Publication 08-229359 (Kanegafuchi) describes a dialyzer the housing and the potting compound for which are formed of one each of a variety of plastics materials. The potting compound moulds around a wedge shaped annulus formed in the interior surface of a ring attachable to the housing. However neither this moulding nor the sealing of the end cap to the ring and of the ring to the housing appear assured.

The present invention however provides a single use dialyzer in which the high manufacture cost problem has been solved whilst maintaining the performance and medical requirements necessary for successful haemodialysis.

According to the present invention a filter device comprises
a housing having a port;
a ring sealed to the housing at an end thereof and having an annular anchor on an interior portion thereof;
a flange cap sealable to the ring and having a port;
a plurality of hollow fibre membranes extending from the ring through the housing;
a potting compound encasing the hollow fibre membranes at the ring and encasing the annular anchor of the ring; characterised in that the annular anchor has an upper surface and a lower surface both having a plurality of rounded ridges thereon.

Whilst the fibres may be looped around and both ends thereof sealed in the same block of potting compound, preferably one end of each fibre is sealed in a first block of potting compound at one end of the housing and the other end of each fibre is sealed in a second block of potting compound at the other end of the housing, with similar rings and flange caps at each end of the housing.

According to a feature of the invention the filter device may further comprise:
first fluid inlet and outlet ports through the flange cap or caps whereby a first fluid pathway is defined by the first fluid inlet and outlet ports and the fibres,
and second fluid inlet and outlet ports through the housing and proximate to end or ends thereof whereby a second fluid pathway is defined by the second fluid inlet and outlet ports and a space between the fibres.

According to another feature of the invention the housing and the ring with the annular anchor may be formed of a polypropylene homopolymer and the potting compound of polyurethane and the annular anchor may receive a surface treatment to modify a surface energy thereof thus to improve adhesion between the polypropylene and the polyurethane.

Advantageously the upper (outer) surface of the or each annular anchor may have a plurality of radial channels perpendicular to the plurality of rounded ridges arranged to allow air to escape when the potting compound is applied to the filter device.

Preferably the ring is spin welded to the housing and the flange cap is spin welded to the ring. To assist the spin welding nubs may be formed on the ring. At least one annular channel may be located between the ring and the housing; and at least one annular channel may be located between the ring and the flange cap; for accommodating a flow of flash material formed during the spin welding.

Alternatively these parts may be laser welded together.

According to other features of the invention the housing may be cylindrical in shape and may incorporate a fluid ingress compartment.

It will be appreciated that a principal purpose of a filter device in accordance with the invention is that of a dialyzer.

According to another aspect of the invention the filter device may be prepared by a process comprising the steps of:
(a) sealably joining the ring to an end of a cylindrical housing, the housing having a port;
(b) inserting a plurality of hollow fibre membranes within the housing and extending to the ring;
(c) encasing the membranes and the annular anchor with a potting compound forming a seal; and
(d) sealably joining a flange cap to the ring, the cap having a port characterised in that the ring has an interior portion having an annular anchor with an upper surface and a lower surface both having a plurality of rounded ridges thereon.

According to a feature of the invention the encasing step (c) may further comprises the steps of;
(c1) attaching a potting cap to the ring to close off the housing end;
(c2) injecting the potting compound into the housing proximate to the end thereof;
(c3) spinning the housing in a centrifuge about an axis perpendicular to the housing longitudinal axis, causing the potting compound to set and harden, encasing and sealing the hollow fibre membranes and the annular anchor at the ring and the housing end;
(c4) removing the potting cap; and
(c5) cutting the potting compound and the membranes at the end, through a plane perpendicular to the longitudinal axis, exposing an interior channel of each of the membranes at that end.

According to another feature of the invention the step (a) may also include the step of treating the annular anchor with a surface treatment to modify a surface energy thereof and assist adhesion between the potting compound and the ring.

According to another feature of the invention the joining steps (a) and (d), comprise:
(a1) spin welding the ring to the housing end; and
(d1) spin welding the flange cap to the ring.

Alternatively the joining steps (a) and (d) may be effected by laser welding.

According to another aspect of the invention a filtering method may comprise the steps of:
(a) providing a filter device having first and second rings sealed to a cylindrical housing at each end thereof, each ring having an annular anchor formed on the interior thereof, the anchor having an upper surface and a lower surface both having a plurality of rounded ridges thereon, a plurality of hollow fibre membranes within the housing and extending between distal faces of the rings, first and second blocks of potting compound encasing the ends of the hollow fibre membranes and the annular anchors, first and second flange caps scaled to the rings, and inlet and exit ports in both the housing and the flange caps respectively;
(b) flowing a first fluid through a first flow path defined by a fluid inlet port in the first flange cap, through the hollow fibre membranes, and out of a the outlet port in said second flange cap; and
(c) flowing a second fluid through a second flow path defined by an inlet port proximate the first end of the housing, through a space between the hollow fibre membranes, and out of outlet port in the housing proximate to the second end thereof.

According to another feature a filtering method may further comprise the steps of:
connecting an arterial blood line to said first fluid inlet port;
connecting a venous blood line to said first fluid outlet port;
connecting a dialysate supply line to said second fluid inlet port;
connecting a dialysate return line to said second fluid outlet port;
whereby impurities in said blood diffuse through said plurality of hollow fribre membranes into said dialysate, and further wherein nutrients diffuse through said plurality of hollow fibre membranes into said blood.

A dialysis filter according to the present invention will now be described by way of example with reference to the accompanying drawings-

### BRIEF DESCRIPTION OF THE DRAWINGS

FIG. 1 shows an overall side view of an embodiment of the filter device of the present invention.
FIG. 2 shows an exploded isometric view of the filter device of

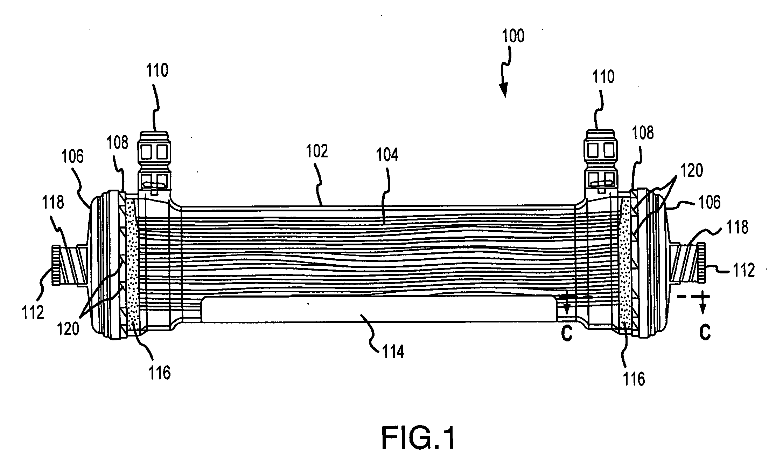

FIG. 1 in an embodiment of the present invention.

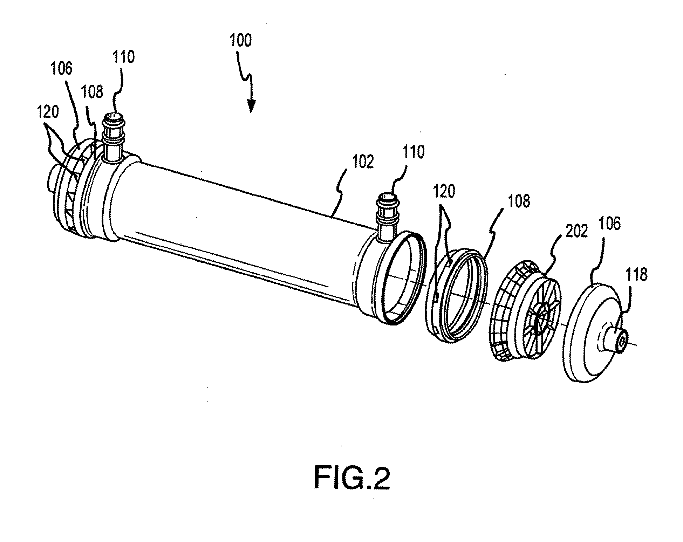

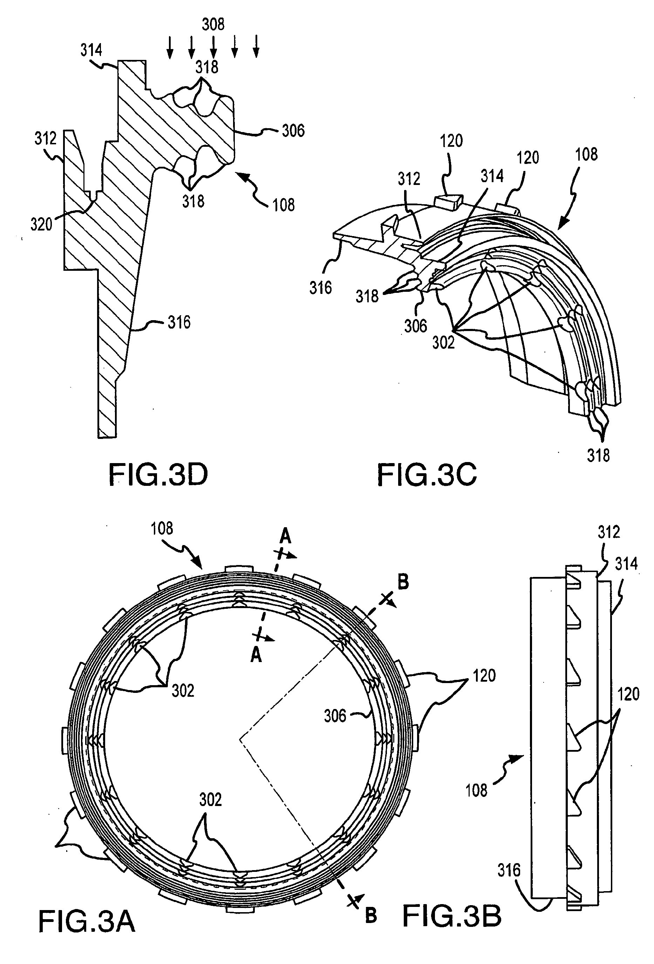

FIGS. 3A-3D show various views of the ring of FIGS. 1 and 2 of an embodiment of the filter device of the present invention.

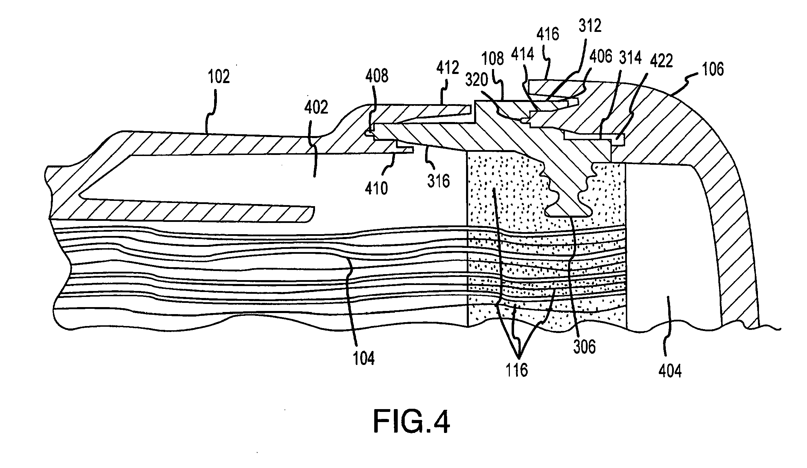

FIG. 4 shows a cross-section view of a portion of the filter device of FIG. 1 in an embodiment of the present invention.

### DETAILED DESCRIPTION OF THE INVENTION

Referring to the Figures, in which like numerals refer to like portions thereof, Figure 1 shows an overall side view and Figure 2 shows an exploded isometric view of an embodiment of the filter device of the present invention. Referring now to FIGS- 1 and 2, filter device 100 in this embodiment of the invention is a dialyzer used for haemodialysis. One skilled in the art will recognize that the filter device of the present invention could also be used for filtering other types of fluids besides blood, including, but not limited to water, sewage, or other types of chemical separation.

Filter device **100** is a dialyzer utilized by patients with kidney disease who suffer from the adverse effects of toxin build-up in their blood. Dialysis is a process which employs an artificial kidney to remove those toxins. In haemodialysis a dialyzer is used which contains a semipermeable membrane dividing the dialyzer into two compartments. Blood is pumped through one compartment and a dialysate solution through the second. As the blood flows by the dialysis fluid, separated by the semipermeable membrane, blood impurities such as urea and creatinine diffuse through the semipermeable membrane into the dialysis solution by diffusion, convection, and absorption. The electrolyte concentration of the dialysis fluid is set so as to maintain electrolytic balance within the patient.

Dialyzers are known in a variety of configurations. The basic concept is to maximize the surface area of the membrane dividing the blood side from the dialysate side, so that the pressure gradient diffusing toxins from the blood side into the dialysate side and diffusing nutrients or pharmacological agents from the dialysate side into the blood side can operate over a wide area. On the other hand, there are size constraints to the overall three dimensional volume of the device, in order to fil into the haemodialysis apparatus.

Filter device **100** has a large number of hollow fibre membranes 104 (not shown in FIG. 2) encased in a housing **102,** which is a hollow cylinder open at both ends. In other designs, the housing **102** may be open only at one end, and hollow fibre membranes **104** are looped in a U-shape in housing **102** such that both open ends of each hollow fibre membrane are located at the one open end ot housing **102** (not shown). In either design, thousands of the hollow semipermeable membranes 104 carry blood in a pathway through one set of open ends of each hollow fibre membrane 104, through the interior of each hollow fibre membrane 104, and exiting out of the other open end of each hollow fibre membrane 104.

As shown in FIG. 1, thousands of the hollow semipermeable hollow fibre membranes 104 carry blood in a pathway that enters from one end through a first blood inlet/outlet port **118** to the opposite end and out through a second blood inlet/outlet port **118** so that blood flows through the interior of each hollow fibre membrane 104 in a first direction. Dialysate inlet/outlet ports 110 are also present on opposite ends of the housing **102.** A first dialysate inlet/outlet port **110** carries dialysate in a pathway into the housing **102,** the dialysate flows through Housing 102 in a countercurrent direction to the blood flow and in the space between each hollow fibre membrane 104, and a second dialysate inlet/outlet port 110 carries the dialysate out of the housing **102.** The material exchange thus takes place across the semipermeable membrane that is the walls of each hollow fibre membrane 104. Label **114** is preprinted and applied after assembly. A cap 112 screws into each blood inlet/outlet port **118** after sterilization, and is utilized to ensure an uncontaminated fluid pathway and is typically not removed until the technician is ready to connect the blood lines.

The design of the filter device 100 produces a high surface area for material exchange in a relatively low volume device. For example, a filter device **100** having a 6.3 cm cylindrical diameter and a 25.4 cm length can easily accommodate a bundle of about 12,000 to 13,000 hollow fibre membranes 104. If each hollow fibre membrane 104 has a 0.60 cm circumference and is 24 cm long, the total surface area of all 12,000-13,000 hollow fibre membranes 104 is approximately 180 cm².

The manufacture of the filter device **100** begins by joining rings **108** into each end of the housing **102.** Each ring **108** is then joined to the housing **102.** Many different joining techniques may be employed including, but not limited to, spin (friction) welding, laser welding, ultrasonic welding, high frequency welding, gluing, adhesive bonding, solvent bonding, screwing with threads, snap fitting, or any other suitable plastic joining technique. In this embodiment of the invention, spin welding is utilized. A plurality of nubs **120** spaced apart on the outer surface of ring **108** constitute the spin welding drive features to assist in the spin welding process. Next, open-ended housing **102** is filled with a bundle of hollow fibre membranes 104 which extend in the longitudinal direction throughout the length of the housing **102** and extending a short distance beyond each end. A potting cap **202** (FIG. 2) is attached to each ring **108** to close off each end of the housing **102.** The housing **102** is then positioned in a centrifuge to allow rotation about an axis perpendicular to the central longitudinal axis, wherein the axis of rotation extends through the midpoint of the housing **102**. Potting compound **116** is then injected into dialysate inlet/outlet ports **110** on each end of the housing **102,** is spun in a centrifuge, and the fibers are effectively potted in the dialyzer. Alternatively, each end of the housing 102 may be separately spin welded and injected in a two step process. In one embodiment of the invention, polyurethane is used for potting compound 116. Epoxy or any other suitable compound may also be used as a potting material. The centrifugal force produced by the rotation in the centrifuge forces potting compound **116** to each end, where it sets and hardens.

The housing **102** is then removed from the centrifuge, and each potting cap **202** is removed from each end to expose the hardened potting compound **116** encasing the ends of each hollow fibre membrane 104. Potting compound **116** and the encased hollow fibre membranes 104 at each end are then cut through in a plane perpendicular Lo the central longitudinal axis of the housing **102,** and the hollow fibre membranes 104 longitudinal axes, to expose the interior channels of each hollow fibre membrane 104. The result is that the ends of each Hollow fibre membrane 104 are open for blood flow through the interior channels of each hollow fibre membrane 104 extending through Housing 102, but the rest of the space surrounding each hollow fibre membrane 104 at both ends of housing 102 is filled with polyurethane, creating a seal between the blood and dialysate.

After the potting and cutting process, a flange cap **106** is attached to each ring **108** and spin welded together, permanently adhering it to filter device **100.** This design eliminates an O-ring typically used to assist in the sealing of the blood compartment of a dialyzer.

Dialysate inlet/outlet port **110** in the walls of the housing **102,** which are toward but not at the very ends, remain open for dialysate flow there through. A dialysate line is connected to one dialysate inlet/outlet port **110** and a dialysate return line is connected to the other dialysate inlet/outlet port 110. The dialysate thus flows through the interior of the housing 102 in the space surrounding the hollow fibre membranes 104 in one direction. Blood flows from an arterial blood line from a patient connected to a first blood inlet/outlet port **118,** entering the exposed ends of each hollow fibre membrane 104 and flowing through the interior channels through the length of the housing **102** in a countercurrent direction, and then out of the other exposed ends of each hollow fibre membrane 104 and back to the patient through a venous blood line connected to a second blood inlet/outlet port **118.** The blood is thus separated from the dialysate by the semipermeable membranes of the hollow fibre walls, which allow the transfer of liquids, toxins, and nutrients by solute diffusion and pressure gradients.

Various seals in a dialyzer must remain intact, which is of special concern when replacing the currently proven expensive materials, from which many dialyzers are made, with less expensive materials in order to reduce costs. Any dialyzer inherently has at least two sealing regions in its respective design. First, the blood and dialysate compartments must be sealed from each other to ensure that a blood leak does not occur. The second seal consists of sealing either the blood or dialysate compartment from the exterior of the dialyzer.

In nearly all dialyzers currently marketed throughout the world, polyurethane is used as a potting material to seal to the housing to ensure that the blood and dialysate compartments are sealed from each other. An O-ring is typically used to separate the blood from the exterior of the dialyzer.

The seals in a dialyzer must not only maintain their integrity through a specified shelf life duration and during the dialysis treatment process, but must also maintain their integrity during the manufacturing process.

The filter device **100** of the present invention utilizes molded parts, including the housing **102** and flange caps **106,** made with a polypropylene homopolymer that possess comparable general characteristics to the polycarbonate used in the molded components of the Fresenius Hemoflow series of dialyzers, but is considerably less expensive. The choice of materials for the dialyzer is heavily dependent upon the manufacturing processes employed. Although optically polypropylene homopolymer is significantly more "hazy" compared to polycarbonate, the blood and dialysate compartments are still readily visible to technicians.

Polyurethane is in one embodiment of the invention used as potting compound **116** for filter device **100.** Instead of an O-ring, a separate ring **108** molded from polypropylene is utilized. One ring **108** is spin welded into each end of the housing **102.** Flange caps **106** are then spin welded onto rings **108** after the filter device **100** has been potted and cut. Other joining techniques as listed above, including laser welding, may be used instead of spin welding. However, spin welding is based on a very simple concept and the process generally can be performed faster, less expensively, and with much less continuous maintenance and re-alignment as compared to laser welding. The weld joint designs utilized in the filter device **100** are very robust and conducive to the rigors of large scale manufacturing.

During the potting process, the interior portion of each ring **108** becomes encased in potting compound **116.** This creates the first seal between the blood and the dialysate compartments. After potting, the potting caps are removed, the ends are cut, and flange caps **106** are spin weld onto rings **108.** The spin welded region constitutes the second seal region, which seals the blood compartment from the outside of filter device **100** (a seal which has typically utilized an O-ring). The filter device **100** is then conditioned during a low flux conditioning process, and then sterilized. Sterilization may be accomplished in a variety of ways, including ethylene oxide (EtO), steam, or radiation sterilization.

A disadvantage of polypropylene is that because of its hydrophobic property it has a tendency to delaminate from the hydrophilic polyurethane potting material due to the chemistry of surface adhesion between the two materials, resulting in leaks between the blood and dialysate compartments. A two-pronged approach has been taken to solve this delamination problem associated with the use of polypropylene. The first involves building a detailed geometry into the design of ring **108** to minimize delamination or propagation of the delamination through the creation of physical stops, discussed more fully in relation to FIGS. 3A-3D. The second involves Lhe modification of the surface characteristics of the polypropylene to increase adhesion between it and the polyurethane, also discussed more fully in relation to FIGS. 3A-3D.

Figures 3A-3D show various views of an embodiment of the ring of FIGS. 1 and 2 in an embodiment of the single use dialyzer of the present invention. FIG. 3A shows a front view of a ring **108.** FIG. 3B shows a side view of the ring **108.** FIG. 3C shows an isometric cross-sectional view of a portion of the ring **108** as seen along lines B-B of FIG. 3A. FIG. 3D shows a cross-sectional view of the ring **108** as seen along line A-A of FIG. 3A.

Referring now to FIGS. 3A-3D, the ring **108** is shaped to coincide with the housing **102** and flange caps **106** that each ring **108** is mated with. Typically, the housing **102,** flange caps **106,** and rings **108** are circular, but other shapes may also be utilized. Ring **108** has an annular tongue **316** which fits into an annular groove in the housing **102** formed by an annular inner lip **410** and an annular outer lip **412** in an interference based snap fit fashion in one embodiment of the invention (see FIG. 4). Ring **108** also has an annular outer rim **312** and an annular inner rim **314** which form an annular groove which is designed to receive the flange cap **106** in an interference based snap fit (see FIG. 4). Potting cap **202** used in the manufacturing process (FIG. 2) is also designed to fit into this annular groove.

Several methods are available to treat the surface of the ring **108** to modify its surface energy to increase adhesion between it and the polyurethane, including plasma, corona discharge, and flame treatments. By increasing the ability of the surface of Ring **108** to adhere to the polyurethane, the ring **108** has been shown to be effective in eliminating potential issues regarding delamination. A delamination could potentially allow the two fluid pathways to mix outside of the filtering hollow fibre membranes. The detailed geometry of the design of the ring **108** increases the surface area treatable through surface treatment, enhancing the effects of modifying the surface energy of the ring **108.**

In one embodiment, a typical surface treatment process which allows for the most practical integration into a clean room automated assembly process is the "corona discharge" surface treatment technique. This treatment method is currently utilized in industry to increase the adhesion of inks, coatings, and adhesives to polyolefins, such as polypropylene. The corona discharge consists of a high voltage electrical discharge that is created between two electrodes across a specified distance. This discharge ionizes the gases present between the electrodes and creates unstable chemical species (mainly free radicals), which possess sufficient energy to initiate bond cleavage at the polymer surface. A small fan is situated just above the corona discharge heads and blows the reactive chemical species onto the polymeric surface of the part being treated, the ring **108,** as shown by arrows **308** in FIG. 3D. Ring 108 is especially well suited to accommodate the corona discharge treatment process, presenting a large surface area due to its geometric design. The corona discharge treatment process is based on the surface being treated to be directly exposed to the electrical discharge, and sections of the surface that are not directly in the "line of sight" of the discharge do not receive as effective treatment. Ring **108** is designed to ensure that the polyurethane interface regions of the ring receive optimal amounts of the surface treatment, while also forcing any delamination that may occur to follow a very difficult pathway. Annular rounded ridges **318** on the upper and lower surfaces of the annular anchor **306** have relatively sharp transitions between them to ensure that optimal amounts of "treatable" area of the ring **108** are exposed to the corona discharge treatment process. When this entire section of the ring **108** is embedded in the potting compound **116,** delamination is forced to essentially "start" again and again after being initiated anywhere along the ring 108/potting compound **116** interface as shown in a close up cross-section of the ring **108,** housing **102,** and flange cap **106** shown in FIG. 4. The effects of the corona discharge treatment may also be somewhat distributed onto annular rounded ridges **318** in the lower surface of the annular anchor **306** as the unreacted unstable chemical species will be blown into the center of the ring **108** and react with the lower surface of the ring **108,** which also is embedded in potting compound **116.** The thickness of the annular anchor **306** tends to decrease or taper inwardly from annular outer rim **312,** as opposed to increasing or expanding inwardly, which aids in this surface treatment process.

Covalent bonds are produced on the surface of the polymer as the surface is oxidized during the treatment process. This oxidative coating on the polypropylene surface allows the hydrophilic polyurethane to effectively bond to the modified polypropylene. Because the oxidative coating on the polypropylene has the ability to interact with the oxygen present in the air, and simply the dynamic nature of polymers, the stability of the corona discharge treatment is limited to a specified amount of time. However, once potted, the modified surface of the ring **108** is permanent and does noL degrade over time.

A large portion of the ring **108,** the annular anchor **306,** serves as a mechanical lock and is located at an interior portion of the ring **108** and is completely embedded in potting compound **116.** This portion of ring **108** forces delamination to completely circumvent around and through the annular rounded ridges **318** to create an actual delamination between the blood and dialysate compartments of the filter device **100** as shown in FIG. 4. Another feature of the ring **108** are radial channels **302.** As the polyurethane potting mass "backfills" from the ends of the filter device **100,** the residual air from the ends of the filter device 100 becomes entrapped due to annular rounded ridges **318** of annular anchor **306** portion of the design of ring **108.** Not allowing the potting mass to bind to the corona discharge treated surface because of an air pocket could potentially create an initiation site for a delamination. To address this situation, radial channels **302** are periodically notched perpendicular to the annular rounded ridges **318** of the upper surface of the annular anchor **306** of the ring **108,** which allows the air to escape and not become trapped during "backfilling" of potting compound **116.** The upper surface of each annular anchor **306** is that surface which faces outward toward the ends of the housing 102.

Figure 4 shows a cross-section view of a portion of the single use dialyzer of FIGS. 1 and 2 in an embodiment of the present invention. Referring now to FIG. 4, dialysate compartment **402** and blood compartment **404** are the regions of ingress and egress of dialysate and blood through dialysate inlet/outlet ports **110** and blood inlet/outlet ports **118** respectively. Annular inner lip **410** and annular outer lip **412** of the housing **102** receives the annular tongue **316** in an interference based snap fit fashion. This connection is spin welded as described above. Typically spin welding of polypropylene does not generally produce expensive spin welding particulate, but material does aggregate around the weld joint in the form of jagged flash (melted polymeric material) which aids in sealing welded parts together. Annular channel **320** and annular channel **408** accommodate the flow of some of the melted flash material that is displaced during the spin welding process.

After the potting and cutting process, in similar fashion annular interior rim **414** and annular exterior rim **416** form an annular groove for receiving annular outer rim **312** of ring **108.** This connection is spin welded as described above. Annular channel **406** also accommodates the flow of some of the melted material that is displaced during the spin welding process. Annular channel **422** is especially arranged so that the flange cap **106** and ring **108** seal off against each other during the spin welding process, entrapping additional amounts of melted flash material from the spin welding process. This design insures that no flash material is allowed to invade the blood compartment **404.** Blood tends to coagulate on any rough surface exposed within blood compartment **404,** which would degrade the functioning of the filter device **100.** One skilled in the art will recognize that annular channel **422** will also trap residue material from the other types of joining techniques mentioned above. The flat annular portions seal up against each other and ensure that the flash produced will not be introduced into the blood compartment of the filter device **100.** However, the welding occurs only at the designated region and not at the flat annular regions where additional amounts of flash may be generated. Additional regions that are designed to contain spin weld flash, or residue material from other types of joining techniques, are located around the housing **102**/ring **108** weld interface as the annular outer lip **412** extends up from the housing **102** along the exterior of the ring **108**, and around the flange cap **106**/ring **108** weld interface as the annular exterior rim **416** extends down from the flange cap **106** along the exterior of the ring **108.** These areas also minimize the flow of flash, or residue material from other types of joining techniques, outside of the filter device 100 improving the aesthetic features.

The results of various studies on the filter device 100 show that the design of the ring **108** provides an excellent surface for the corona discharge treatment prior to potting. Extensive quality and delamination testing from two separate experiments of nearly 600 separate filter device **100** samples determined that the current design would have a 0.00% chance of delaminating with an upper binomial confidence level of 0.09%. Extensive testing shows that the design of the filter device **100** possesses excellent capability of resisting delamination, possesses high performance characteristics, and has significantly reduced manufacturing costs. In addition, the clearance characteristics of the filter device **100** are among the highest currently available on the market.

## Claims

1. A filter device comprising:
a housing (102) having a port (110);
a ring (108) sealed to the housing (102) at an end thereof and
having an annular anchor (306) on an interior portion thereof;
a flange cap (106) sealable to the ring (108) and having a port (118);
a plurality of hollow fibre membranes (104) extending from the ring (108) through the housing (102);
a potting compound (116) encasing the hollow fibre membranes (104) at the ring (108) and encasing the annular anchor (306) of the ring;
**characterised in that** the annular anchor (306) has an upper surface and a lower surface both having a plurality of rounded ridges (318) thereon.

2. A filter device as claimed in claim 1 and wherein the housing (102) has at both ends thereof a ring (108) sealed thereto having an annular anchor (306) on the interior portion thereof, a flange cap (106) sealed to the ring (108) , a plurality of hollow fibre membranes (104) extending from the ring (108) through the housing (102), a potting compound (116) encasing the hollow fibre membranes (104) at the ring (108) and encasing the annular anchor (306) of the ring, and **characterised in that** the annular anchor (306) has an upper surface and a lower surface both having a plurality of rounded ridges (318) thereon.

3. A filter device as claimed in claim 2 and having an inlet port (118) in one flange cap (106) and an outlet port (118) in the other flange cap (106) and an inlet port (110) in the housing (102) at one end thereof and an outlet port (110) in the housing (102) at the other end thereof.

4. A filter device as claimed in any one of claims 1 to 3 and wherein the housing (102) and the ring (108) with the annular anchor (306) are formed of a polypropylene homopolymer and the potting compound (116) of polyurethane, and wherein the annular anchor (306) has received a surface treatment to modify the surface energy thereof thus to improve adhesion between the polypropylene and the polyurethane.

5. A filter device as claimed in any one of the preceding claims and wherein the upper surface of said annular anchor has a plurality of radial channels (302) perpendicular to the plurality of rounded ridges (318), arranged to allow air to escape when said potting compound (116) is applied to said filter device.

6. A filter device as claimed in any one of the preceding claims and wherein the ring (108) is spin welded to the housing (102) and the flange cap (106) is spin welded to the ring (108).

7. A filter device as claimed in claim 6 and having nubs (120) constituting spin welding drive features to assist in the spin welding process.

8. A filter device as claimed in claim 6 or claim 7 and having at least one annular channel (408) located between the ring (108) and the housing (102), for accommodating a flow of flash material formed during the spin welding.

9. A filter device as claimed in any one of claims 6 to 8 and having at least one annular channel (320, 406) located between the ring (108) and the flange cap (106), for accommodating a flow of flash material formed during the spin welding.

10. A filter device as claimed in any one of the preceding claims and wherein the housing (102) has an annular inner lip (410) and an annular outer lip (412) and the ring (108) has an annular tongue (316) adapted to be received between the lips (410) and (412) .

11. A filter device as claimed in any one of the preceding claims and wherein the ring (108) has an annular outer rim (312) and the flange cap (106) an annular inner rim (414) and an annular outer rim (416) adapted to receive the rim (312).

12. A filter device as claimed in any one of claims 1 to 5 and wherein the ring (108) is laser welded to the housing (102) end and the flange cap (106) is laser welded to the ring (108).

13. A filter as claimed in any one of the preceding claims and which is a dialyzer.

14. A filter as claimed in any one of the preceding claims and wherein the housing (102) has a fluid ingress compartment (402).

15. A process for manufacturing a filter device and comprising the steps of:
(a) sealably joining a ring (108) to an end of a cylindrical housing (102), the housing having a port (110);
(b) inserting a plurality of hollow fibre membranes (104) within the housing (102) and extending to the ring (108);
(c) encasing the membranes (104) and the annular anchor (306) with a potting compound (116) forming a seal; and
(d) sealably joining a flange cap (106) to the ring (108), the cap having a port (118);
**characterised in that** the ring (108) has an interior portion having an annular anchor (306) with an upper surface and a lower surface both having a plurality of rounded ridges (318) thereon.

16. A process as claimed in claim 15 and wherein the encasing step (c) further comprises the steps of:
(c1) attaching a potting cap (202) to the ring (108) to close off the housing end;
(c2) injecting the potting compound (116) into the housing (102) proximate to the end thereof;
(c3) spinning the housing (102) in a centrifuge about an axis perpendicular to the housing longitudinal axis, causing the potting compound (116) to set and harden, encasing and sealing the hollow fibre membranes (104) and the annular anchor (306) at the ring (108) and the housing (102) end;
(c4) removing the potting cap (202); and
(c5) cutting the potting compound (116) and the membranes (104) at the end, through a plane perpendicular to the longitudinal axis, exposing an interior channel of each of the membranes at that end.

17. A process as claimed in claim 15 or claim 16 and wherein the step (a) also includes the step of treating the annular anchor (306) with a surface treatment to modify a surface energy thereof and assist adhesion between the potting compound (116) and the ring (108).

18. A process as claimed in claim 17 and wherein the surface treatment comprises corona discharge surface treatment.

19. A process as claimed in any one of claims 15 to 18 and wherein the joining steps (a) and (d) comprise:
(a1) spin welding the ring (108) to the housing (102) end; and
(d1) spin welding the flange cap (106) to the ring (108).

20. A process as claimed in any one of claims 15 to 18 and wherein the joining steps (a) and (d) comprise:
(a1) laser welding the ring (108) to the housing (102) end; and
(d1) laser welding the flange cap (106) to the ring (108).

21. A process as claimed in any one of claims 15 to 20 and wherein the housing (102), the ring (108) and the flange cap (106) are formed of a polypropylene homopolymer and the potting compound (116) of polyurethane.

22. A filtering method comprising the steps of:
(a) providing a filter device having first and second rings (108)sealed to a cylindrical housing (102) at each end thereof, each ring (108) having an annular anchor (306) formed on the interior thereof, the anchor (306) having an upper surface and a lower surface both having a plurality of rounded ridges (318) thereon, a plurality of hollow fibre membranes (104) within the housing (102) and extending between distal faces of the rings (108), first and second blocks of potting compound (116) encasing the ends of the membranes (104) and the annular anchors (306), first and second flange caps (106) sealed to the rings (108) and inlet and exit ports (110, 118) in the housing (102) and in the flange caps (106) respectively;
(b) flowing a first fluid through a first flow path defined by a fluid inlet port (118) in the first flange cap (106), through the membranes (104), and out of the exit port (118) in the second flange cap (106); and
(c) flowing a second fluid through a second flow path defined by an inlet port (110) proximate the first end of the housing (102), through a space between the membranes (104) and the housing, and out of the exit port (110) in the housing (102) proximate the second end thereof.

## Patentansprüche

1. Filtervorrichtung, die umfasst:
ein Gehäuse (102) mit einem Anschluss (110);
einen Ring (108), der am Gehäuse (102) an einem Ende hiervon dicht angebracht ist und an einem Innenabschnitt hiervon einen ringförmigen Anker (306) besitzt;
eine Flanschkappe (106), die an dem Ring (108) dicht angebracht werden kann und einen Anschluss (118) besitzt;
mehrere Hohlfasermembranen (104), die sich von dem Ring (108) durch das Gehäuse (102) erstrecken; und
einen Vergieß-Verbundwerkstoff (116), der die Hohlfasermembranen (104) bei dem Ring (108) umgibt und den ringförmigen Anker (306) des Rings umgibt;
**dadurch gekennzeichnet, dass** der ringförmige Anker (306) eine obere Oberfläche und eine untere Oberfläche besitzt, an denen jeweils mehrere abgerundete Stege vorhanden sind.

2. Filtervorrichtung nach Anspruch 1, wobei das Gehäuse (102) an seinen beiden Enden einen daran dicht angebrachten Ring (108) mit einem ringförmigen Anker (306) an dem inneren Abschnitt hiervon, eine an dem Ring (108) dicht angebrachte Flanschkappe (106), mehrere Hohlfasermembranen (104), die sich von dem Ring (108) durch das Gehäuse (102) erstrecken, und einen Vergieß-Verbundwerkstoff (116), der die Hohlfasermembranen (104) bei dem Ring (108) umgibt und den ringförmigen Anker (306) des Rings umgibt, umfasst, **dadurch gekennzeichnet, dass** der ringförmige Anker (306) eine obere Oberfläche und eine untere Oberfläche besitzt, an denen jeweils mehrere abgerundete Stege (318) vorhanden sind.

3. Filtervorrichtung nach Anspruch 2, die einen Einlassanschluss (118) in einer Flanschkappe (106) und einen Auslassanschluss (118) in der anderen Flanschkappe (106) sowie einen Einlassanschluss (110) im Gehäuse (102) an einem Ende hiervon und einen Auslassanschluss (110) im Gehäuse (102) am anderen Ende hiervon besitzt.

4. Filtervorrichtung nach einem der Ansprüche 1 bis 3, wobei das Gehäuse (102) und der Ring (108) mit dem ringförmigen Anker (306) aus einem Polypropylen-Homopolymer gebildet sind und der Vergieß-Verbundwerkstoff (106) aus Polyurethan gebildet ist und wobei der ringförmige Anker (306) eine Oberflächenbehandlung empfangen hat, um die Oberflächenenergie hiervon zu modifizieren, um **dadurch** die Haftung zwischen dem Polypropylen und dem Polyurethan zu verbessern.

5. Filtervorrichtung nach einem der vorhergehenden Ansprüche, wobei die obere Oberfläche des ringförmigen Ankers mehrere radiale Kanäle (302) senkrecht zu den mehreren abgerundeten Stegen (318) besitzt, die dazu ausgelegt sind, ein Entweichen von Luft zuzulassen, wenn der Vergieß-Verbundwerkstoff (116) auf die Filtervorrichtung aufgebracht wird.

6. Filtervorrichtung nach einem der vorhergehenden Ansprüche, wobei der Ring (108) an dem Gehäuse (102) rotationsverschweißt ist und die Flanschkappe (106) am Ring (108) rotationsverschweißt ist.

7. Filtervorrichtung nach Anspruch 6, die Noppen (120) besitzt, die Rotationsschweiß-Antriebsmerkmale bilden, um den Rotationsschweißprozess zu unterstützen.

8. Filtervorrichtung nach Anspruch 6 oder Anspruch 7, die wenigstens einen ringförmigen Kanal (408) besitzt, der sich zwischen dem Ring (108) und dem Gehäuse (102) befindet, um eine Strömung von geschmolzenen Material, das während des Rotationsschweißens gebildet wird, aufzunehmen.

9. Filtervorrichtung nach einem der Ansprüche 6 bis 8, die wenigstens einen ringförmigen Kanal (320, 406) besitzt, der sich zwischen dem Ring (108) und der Flanschkappe (106) befindet, um eine Strömung von geschmolzenem Material, das während des Rotationsschweißens gebildet wird, aufzunehmen.

10. Filtervorrichtung nach einem der vorhergehenden Ansprüche, wobei das Gehäuse (102) eine ringförmige innere Lippe (410) und eine ringförmige äußere Lippe (412) besitzt und der Ring (108) eine ringförmige Zunge (316) besitzt, die dazu ausgelegt ist, zwischen den Lippen (410) und (412) aufgenommen zu werden.

11. Filtervorrichtung nach einem der vorhergehenden Ansprüche, wobei der Ring (108) einen ringförmigen äußeren Rand (312) besitzt und die Flanschkappe (106) einen ringförmigen inneren Rand (414) und einen ringförmigen äußeren Rand (416), die dazu ausgelegt sind, den Rand (312) aufzunehmen, besitzt.

12. Filtervorrichtung nach einem der Ansprüche 1 bis 5, wobei der Ring (108) am Ende des Gehäuses (102) laserverschweißt ist und der Flanschabschnitt (106) am Ring (108) laserverschweißt ist.

13. Filter nach einem der vorhergehenden Ansprüche, der ein Dialysator ist.

14. Filter nach einem der vorhergehenden Ansprüche, wobei das Gehäuse (102) ein Fluideintrittsfach (402) besitzt.

15. Verfahren zum Herstellen einer Filtervorrichtung, das die folgenden Schritte umfasst:
(a) dichtes Verbinden eines Rings (108) mit einem Ende eines zylindrischen Gehäuses (102), wobei das Gehäuse einen Anschluss (110) besitzt;
(b) Einsetzen mehrerer Hohlfasermembranen (104) in das Gehäuse (102), die sich zu dem Ring (108) erstrecken;
(c) Umgeben der Membranen (104) und des ringförmigen Ankers (306) mit einem Vergieß-Verbundwerkstoff (116), der eine Dichtung bildet; und
(d) dichtes Verbinden einer Flanschkappe (106) mit dem Ring (108), wobei die Kappe einen Anschluss (118) besitzt;
**dadurch gekennzeichnet, dass** der Ring (108) einen Innenabschnitt besitzt, der einen ringförmigen Anker (306) mit einer oberen Oberfläche und einer unteren Oberfläche besitzt, an denen jeweils mehrere abgerundete Stege (318) vorhanden sind.

16. Verfahren nach Anspruch 15, wobei der Umgebeschritt (c) ferner die folgenden Schritte umfasst:
(c1) Befestigen einer Vergießkappe (202) an dem Ring (108), um das Gehäuseende zu verschließen;
(c2) Einspritzen des Vergieß-Verbundwerkstoffs (116) in das Gehäuse (102) in der Nähe seines Endes;
(c3) schnelles Drehen des Gehäuses (102) in einer Zentrifuge um eine Achse senkrecht zu der Gehäuselängsachse, was bewirkt, dass der Vergieß-Verbundwerkstoff (116) erstarrt und härtet und die Hohlfasermembranen (104) und den ringförmigen Anker (306) am Ring (108) und am Ende des Gehäuses (102) umgibt und abdichtet;
(c4) Entfernen der Vergießkappe (202); und
(c5) Abschneiden des Vergieß-Verbundwerkstoffs (116) und der Membranen (104) an dem Ende in einer Ebene senkrecht zu der Längsachse, wodurch ein Innenkanal jeder der Membranen an diesem Ende-freigelegt wird.

17. Verfahren nach Anspruch 15 oder Anspruch 16, wobei der Schritt (a) außerdem den Schritt des Behandelns des ringförmigen Ankers (306) mit einem Oberflächenbehandlungsmittel umfasst, um seine Oberflächenenergie zu modifizieren und um das Kleben zwischen dem Vergieß-Verbundwerkstoff (116) mit dem Ring (108) zu unterstützen.

18. Verfahren nach Anspruch 17, wobei die Oberflächenbehandlung eine Koronaentladungs-Oberflächenbehandlung umfasst.

19. Verfahren nach einem der Ansprüche 15 bis 18, wobei die Verbindungsschritte (a) und (d) umfassen:
(a1) Rotationsschweißen des Rings (108) an das Ende des Gehäuses (102); und
(d1) Rotationsschweißen der Flanschkappe (106) an den Ring (108).

20. Verfahren nach einem der Ansprüche 15 bis 18, wobei die Verbindungsschritte (a) und (d) umfassen:
(a1) Laserschweißen des Rings (108) an das Ende des Gehäuses (102); und
(d1) Laserschweißen der Flanschkappe (106) an den Ring (108).

21. Verfahren nach einem der Ansprüche 15 bis 20, wobei das Gehäuse (102), der Ring (108) und die Flanschkappe (106) aus einem Polypropylen-Homopolymer gebildet sind und der Vergieß-Verbundwerkstoff (116) aus Polyurethan gebildet ist.

22. Filterungsverfahren, das die folgenden Schritte umfasst:
(a) Vorsehen einer Filtervorrichtung mit einem ersten und einem zweiten Ring (108), die an einem zylindrischen Gehäuse (102) an jedem Ende hiervon dicht angebracht sind, wobei jeder Ring (108) einen ringförmigen Anker (306) besitzt, der an der Innenseite hiervon ausgebildet ist, wobei der Anker (306) eine obere Oberfläche und eine untere Oberfläche besitzt, an denen jeweils mehrere abgerundete Stege (318) vorhanden sind, wobei mehrere Hohlfasermembranen (104) in dem Gehäuse (102) vorhanden sind und sich zwischen distalen Flächen der Ringe (108) erstrecken und wobei erste und zweite Blöcke aus Vergieß-Verbundwerkstoff (116) die Enden der Membranen (104) und der ringförmigen Anker (306) umgeben, wobei erste und zweite Flanschkappen (106) an den Ringen (108) dicht angebracht sind und Einlass- und Austrittsanschlüsse (110, 118) in dem Gehäuse (102) bzw. in den Flanschkappen (106) vorhanden sind;
(b) Schicken einer ersten Fluidströmung durch einen ersten Strömungsweg, der durch einen Fluideinlassanschluss (118) in der ersten Flanschkappe (106), durch die Membranen (104) und aus den Austrittsanschluss (118) in der zweiten Flanschkappe (106) definiert ist; und
(c) Schicken einer zweiten Fluidströmung durch einen zweiten Strömungsweg, der durch einen Einlassanschluss (110) in der Nähe des ersten Endes des Gehäuses (102), durch einen Raum zwischen den Membranen (104) und dem Gehäuse und aus dem Austrittsanschluss (110) in dem Gehäuse (102) in der Nähe des zweiten Endes hiervon definiert ist.

## Revendications

1. Dispositif de filtrage comprenant :
un logement (102) comportant un orifice (110) ;
une bague (108) montée de façon étanche sur le logement (102) au niveau de son extrémité et
ayant une pièce d'ancrage annulaire (306) sur sa partie intérieure ;
un culot à bride (106) pouvant être monté de façon étanche sur la bague (108) et présentant un orifice (118) ;
une pluralité de membranes à fibres creuses (104) s'étendant à partir de la bague (108) à travers le logement (102) ;
un composé d'encapsulage (116) enrobant les membranes à fibres creuses (104) au niveau de la bague (108) et
enrobant la pièce d'ancrage annulaire (306) de la bague ;
**caractérisé en ce que** la pièce d'ancrage annulaire (306) présente une surface supérieure et une surface inférieure supportant toutes deux une pluralité de nervures arrondies (318) .

2. Dispositif de filtrage selon la revendication 1 et dans lequel le logement (102) comporte, au niveau de ses deux extrémités, une bague (108) montée sur elles de façon étanche comportant un pièce d'ancrage annulaire (306) sur sa partie interne, un culot à bride(106) monté de façon étanche sur la bague (108), une pluralité de membranes à fibres creuses (104) s'étendant à partir de la bague (108) à travers le logement (102), un composé d'encapsulage (116) enrobant les membranes à fibres creuses (104) au niveau de la bague (108) et enrobant la pièce d'ancrage annulaire (306) de la bague, et **caractérisé en ce que** la pièce d'ancrage annulaire (306) présente une surface supérieure et une surface inférieure présentant toutes deux sur elles une pluralité de nervures arrondies (318).

3. Dispositif de filtrage selon la revendication 2 et comportant un orifice d'admission (118) dans un premier culot à bride (106) et un orifice de sortie (118) dans l'autre culot à bride (106) et un orifice d'admission (110) dans le logement (102) au niveau de l'une de ses extrémités et un orifice de sortie (110) dans le logement (102) au niveau de son autre extrémité.

4. Dispositif de filtrage selon l'une quelconque des revendications 1 à 3 et dans lequel le logement (102) et la bague (108) dotée de la pièce d'ancrage annulaire (306) sont formés d'un homopolymère de polypropylène et le composé d'encapsulage (116) de polyuréthane, et dans lequel la pièce d'ancrage annulaire (306) a reçu un traitement de surface afin de modifier son énergie superficielle et, ainsi, d'améliorer l'adhérence entre le polypropylène et le polyuréthane.

5. Dispositif de filtrage selon l'une quelconque des revendications précédentes et dans lequel la surface supérieure de ladite pièce d'ancrage annulaire comporte une pluralité de canaux radiaux (302) perpendiculaires à la pluralité de nervures arrondies (318), agencés afin de permettre à l'air de s'échapper lorsque ledit composé d'encapsulage (116) est appliqué sur ledit dispositif de filtrage.

6. Dispositif de filtrage selon l'une quelconque des revendications précédentes et dans lequel la bague (108) est soudée par friction au logement (102) et le culot à bride (106) est soudé par friction à la bague (108).

7. Dispositif de filtrage selon la revendication 6 et comportant des protubérances (120) constituant des caractéristiques de commande de soudure par friction afin d'aider au processus de soudure par friction.

8. Dispositif de filtrage selon la revendication 6 ou la revendication 7 et comportant au moins une gorge annulaire (408) située entre la bague (108) et le logement (102) pour recevoir un écoulement de matériau de bavure formé pendant le soudage par friction.

9. Dispositif de filtrage selon l'une quelconque des revendications 6 à 8 et comportant au moins une gorge annulaire (320, 406) située entre la bague (108) et le culot à bride (106), pour recevoir un écoulement de matériau de bavure formé pendant le soudage par friction.

10. Dispositif de filtrage selon l'une quelconque des revendications précédentes et dans lequel le logement (102) comporte une lèvre annulaire intérieure (410) et une lèvre annulaire extérieure (412) et dans lequel la bague (108) comporte une languette annulaire (316) adaptée pour être reçue entre les lèvres (410) et (412).

11. Dispositif de filtrage selon l'une quelconque des revendications précédentes et dans lequel la bague (108) comporte un rebord annulaire extérieur (312) et le culot à bride (106), un rebord annulaire intérieur (414) et un rebord annulaire extérieur (416) adapté pour recevoir le rebord (312) .

12. Dispositif de filtrage selon l'une quelconque des revendications 1 à 5 et dans lequel la bague (108) est soudée au laser à l'extrémité du logement (102) et le culot à bride (106) est soudé au laser à la bague (108).

13. Filtre selon l'une quelconque des revendications précédentes et qui est un dialyseur.

14. Filtre selon l'une quelconque des revendications précédentes et dans lequel le logement (102) comporte un compartiment d'entrée de fluide (402).

15. Processus de fabrication d'un dispositif de filtrage et comportant les étapes comprenant le fait de :
a) lier de façon étanche une bague (108) à une extrémité d'un logement cylindrique (102), le logement comportant un orifice (110) ;
b) insérer une pluralité de membranes à fibres creuses (104) à l'intérieur du logement (102) et s'étendant vers la bague (108) ;
c) enrober les membranes (104) et la pièce d'ancrage annulaire (306) avec un matériau d'encapsulage (116) formant un joint d'étanchéité ; et
d) lier de façon étanche un culot à bride (106) à la bague (108), le culot comportant un orifice (118) ; **caractérisé en ce que** la bague (108) possède une partie interne présentant un pièce d'ancrage annulaire (306) ayant une surface supérieure et une surface inférieure toutes deux comportant sur elles une pluralité de nervures arrondies (318).

16. Procédé selon la revendication 15 et dans lequel l'étape d'enrobage c) comporte, de plus, les étapes comprenant le fait de :
c1) fixer un culot d'enrobage (202) sur la bague (108) afin d'obturer l'extrémité du logement ;
c2) injecter le composé d'encapsulage (116) dans le logement (102) à proximité de son extrémité ;
c3) faire tourner le logement (102) dans une centrifugeuse autour d'un axe perpendiculaire à l'axe longitudinal du logement, entraînant le composé d'encapsulage (116) à prendre et à se durcir, enrobant et rendant étanche les membranes à fibres creuses (104) et la pièce d'ancrage annulaire (306) au niveau de la bague (108) et de l'extrémité du logement (102) ;
c4) éliminer le culot d'enrobage (202) ; et
c5) couper le composé d'encapsulage (116) et les membranes (104) au niveau de l'extrémité, à travers un plan perpendiculaire à l'axe longitudinal, exposant un canal intérieur de chacune des membranes au niveau de cette extrémité.

17. Procédé selon la revendication 15 ou la revendication 16 et dans lequel l'étape a) comporte également l'étape comprenant de traiter la pièce d'ancrage annulaire (306) avec un traitement de surface afin de modifier son énergie superficielle et d'aider l'adhérence entre le composé d'encapsulage (116) et la bague (108).

18. Procédé selon la revendication 17 et dans lequel le traitement de surface comporte un traitement de surface par décharge en effet corona.

19. Procédé selon l'une quelconque des revendications 15 à 18 et dans lequel les étapes de jonction a) et d) comprennent de :
a1) souder par friction la bague (108) à l'extrémité du logement (102); et
d1) souder par friction le culot à bride (106) à la bague (108) .

20. Procédé selon l'une quelconque des revendications 15 à 18 et dans lequel les étapes de jonction a) et d) comprennent le fait de :
a1) souder au laser la bague (108) à l'extrémité du logement (102) ; et
d1) souder au laser le culot à bride (106) à la bague (108) .

21. Procédé selon l'une quelconque des revendications 15 à 20 et dans lequel le logement (102), la bague (108) et le culot à bride (106) sont formés d'un homopolymère de polypropylène et le composé d'encapsulage (116) de polyuréthane.

22. Procédé de filtrage comportant les étapes comprenant de :
a) fournir un dispositif de filtrage possédant une première et une seconde bagues (108) fixées de façon étanche à un logement cylindrique (102) au niveau de chacune de ses extrémités, chaque bague (108) comportant une pièce d'ancrage annulaire (306) formée sur sa partie intérieure, la pièce d'ancrage (306) présentant une surface supérieure et une surface inférieure supportant toutes deux une pluralité de nervures arrondies (318), une pluralité de membranes à fibres creuses (104) à l'intérieur du logement (102) et s'étendant entre les faces distales des bagues (108), un premier et un second blocs de composé d'encapsulage (116) enrobant les extrémités des membranes (104) et les pièces d'ancrage annulaires (306), un premier et un second culots à bride (106) fixés de façon étanche aux bagues (108) et des orifices d'entrée et de sortie (110, 118) dans le logement (102) et dans les culots à bride (106), respectivement ;
b) faire circuler un premier fluide à travers un premier chemin d'écoulement défini par un orifice d'admission de fluide (118) dans le premier culot à bride (106), à travers les membranes (104), et hors de l'orifice de sortie (118) dans le second culot à bride (106) ; et
c) faire circuler un second fluide à travers un second chemin d'écoulement défini par un orifice d'admission (110) situé à proximité de la première extrémité du logement (102), à travers un espace situé entre les membranes (104) et le logement, et hors de l'orifice de sortie (110) dans le logement (102) situé à proximité de sa seconde extrémité.
